# EUROPEAN PATENT SPECIFICATION

(11) **EP 1 230 247 B1**
(45) Date of publication and mention of the grant of the patent: **07.01.2004**
(21) Application number: 00973896.4
(22) Date of filing: 26.10.2000
(51) Int. Cl.: C07F 7/20, C08G 77/34

(54) **PROCESS FOR STABILIZATION OF SILOXANE COMPOUNDS**
VERFAHREN ZUR STABILISIERUNG VON SILOXAN-VERBINDUNGEN
PROCEDE DE STABILISATION DE COMPOSES DE SILOXANE

(30) Priority: 10.11.1999 US 438069; 12.04.2000 US 547645
(43) Date of publication of application: 14.08.2002
(73) Proprietor: GENERAL ELECTRIC COMPANY, Schenectady, NY 12345 (US)
(72) Inventor: PERRY, Robert, James, Niskayuna, NY 12309 (US); RICCIO, Donna, A., Watervliet, NY 12189 (US)
(74) Representative: Szary, Anne Catherine, Dr.
(86) International application number: PCT/US2000/029537
(87) International publication number: WO 2001/034613

(56) References cited:
- EP-A- 0 186 736
- DE-A- 2 904 706
- DE-A- 3 739 711
- US-A- 3 755 152

## Description

### CROSS-REFERENCE TO RELATED APPLICATIONS

### TECHNICAL FIELD

The present invention is directed to a process, more specifically, to a process for stabilizing silicone dry cleaning solvents containing acidic impurities.

### BACKGROUND

Current dry cleaning technology uses perchloroethylene ("PERC") or petroleum-based materials as the cleaning solvent. PERC suffers from toxicity and odor issues. The petroleum-based products are not as effective as PERC in cleaning garments. Volatile siloxanes are being introduced into the dry cleaning industry as an alternative to PERC. However, there exists a need to stabilize the siloxane solvents to prevent undesirable cyclic siloxane (D₄) formation and polymerization.

Methods for the purification of organopolysiloxanes have previously been reported, but they have not been reported for the purification of certain cyclic siloxanes (D₅). Methods for purifying organopolysiloxanes utilizing elemental metals have been reported (see US 5,245,067). Other patents disclose the purification of polyether silicones by contacting with an aqueous acid and removing the odorous materials formed (see US 5,118,764), or the reaction with hydrogen and a hydrogenation catalyst (see US 5,225,509). Hexamethyldisiloxane has been purified by successive treatments with a condensation catalyst, washing with water, separating the phases, distilling the siloxane, treating with acid clay and then treating with activated carbon (see US 4,774,346). Siloxanes have also been purified by contacting with steam and distilling out the impurities (see EP 543 665). A deodorization method utilizing active carbon to which a functional group has been fixed through a silanol bond has been reported (see US 5,238,899). Finally, a method was reported for purifying silicone oil by adding a drying agent and an adsorption agent to silicone and passing a low water vapor inert gas through the system (see US 4,661,612).

US-A-3755152 discloses treating oils or other organic liquids having contaminants which are difficult to separate from the oils by mixing and finely subdividing granules of two different surface active adsorbents, such as an activated carbon adsorbent and a molecular sieve adsorbent, adding the mixed adsorbents to the contaminated oil preferably with high shear mixing and heating, allowing the mixed adsorbents to remove the contaminants, and separating the colloidal sized solid adsorbents from the treated materials by for example filtration. Oils able to be treated include silicone oils and mineral oils. With this method, it is possible to in some instances remove contaminants without removing additives, if desired.

DE-A-3739711 discloses polydialkylcyclic siloxanes as dry cleaning solvents for textiles. The solvents may be regenerated by distillation and/or filtration or adsorption.

There is a need for stabilizing the siloxane and suppressing reequilibration and polymerization of the volatile siloxane containing acidic impurities that is used in dry cleaning applications.

### SUMMARY OF THE INVENTION

In a first aspect, the present invention is directed to a method for stabilizing silicone dry cleaning solvents that contain an undesirable acidic impurity comprising contacting the silicone solvent with an adsorbent, and separating the silicone solvent.

The process of the present invention is effective in preventing formation of certain cyclic siloxanes (i.e., D₄) that are undesirable in the silicone solvent.

As used herein, the terms "D₄", "D₅" and "D₆" refer to cyclic siloxanes having the formula: -(R₂SiO)ₓ- where x is 4, 5 or 6 (i.e., D₅ is decamethylcyclopentasiloxane).

### DETAILED DESCRIPTION OF THE INVENTION

Preferably, the first preferred embodiment of the method of the present invention comprises, contacting a silicone dry cleaning solvent that contains an undesirable acidic impurity with an adsorbent, and separating the silicone solvent. Preferably, the silicone dry cleaning solvent is a volatile linear, branched, cyclic or a combination thereof, siloxane.

The amount of these impurities that may be present in the siloxane solvent without preventing reequilibration may be up to about 0.1 parts by weight. The impurities may be introduced into the silicone solvents during the dry cleaning operation, and if they are not removed, reequilibration and polymerization of the solvent may take place, and undesirable cyclics are formed.

Compounds suitable as the adsorbent are those that effectively remove the acidic impurity and prevent gelling and formation of undesirable cyclics in the siloxane solvent. Examples of adsorbents suitable for use include, but are not limited to, carbon black, silica gel, celite, fullers earth, decolorizing charcoal, filtrol, molecular sieves, diatomaceous earth, magnesium sulfate, cob powder, clays, and alumina. In a preferred embodiment, the adsorbent is selected from silica gel, diatomaceous earth, fullers earth, acid clay, 4A molecular sieves, 13X molecular sieves, and decolorizing charcoal.

Compounds suitable as the linear or branched, volatile siloxane solvent of the present invention are those containing a polysiloxane structure that includes from 2 to 20 silicon atoms. Preferably, the linear or branched, volatile siloxanes are relatively volatile materials, having, for example, a boiling of below about 300°C at a pressure of 760 millimeters of mercury ("mm Hg").

In a preferred embodiment, the linear or branched, volatile siloxane comprises one or more compounds of the structural formula (I):

M_{2+y+2z}DₓT_{y}Q_{z} (I)

wherein:
M is R¹₃SiO_{1/2};
D is R²₂SiO_{2/2};
T is R³SiO_{3/2};
and Q is SiO_{4/2}
R¹, R² and R³ are each independently a monovalent hydrocarbon radical; and
x and y are each integers, wherein 0 ≤ x ≤ 10 and 0 ≤ y ≤ 10 and 0 ≤ z ≤ 10.

Suitable monovalent hydrocarbon groups include acyclic hydrocarbon radicals, monovalent alicyclic hydrocarbon radicals, monovalent and aromatic hydrocarbon radicals. Preferred monovalent hydrocarbon radicals are monovalent alkyl radicals containing from 1 to 6 carbons per group, such as, for example, methyl, ethyl, propyl, iso-propyl, n-butyl, it o-butyl, sec-butyl, tert-butyl, pentyl, hexyl, preferably methyl, monovalent aryl radicals, such as, for example, phenyl, 2,4,6-trimethylphenyl, 2-isopropylmethylphenyl, 1-pentalenyl, naphthyl, anthryl, preferably phenyl, and monovalent aralkyl radicals such as, for example, phenylethyl, phenylpropyl, 2-(1-naphthyl)ethyl, preferably phenylpropyl, phenyoxypropyl, biphenyloxypropyl.

In a preferred embodiment, the monovalent hydrocarbon radical is a monovalent alkyl radical containing from 1 to 6 carbons per group, most preferably, methyl.

In a preferred embodiment, the linear or branched, volatile siloxane comprises one or more of, hexamethyldisiloxane, octamethyltrisiloxane, decamethyltetrasiloxane, dodecamethylpentasiloxane, tetradecamethylhexasiloxane or hexadecamethylheptasiloxane or methyltris(trimethylsiloxy)silane. In a more highly preferred embodiment, the linear or branched, volatile siloxane of the present invention comprises octamethyltrisiloxane, decamethyltetrasiloxane, or dodecamethylpentasiloxane or methyltris(trimethylsiloxy)silane. In a highly preferred embodiment, the siloxane component of the composition of the present invention consists essentially of decamethyltetrasiloxane.

Suitable linear or branched volatile siloxanes are made by known methods, such as, for example, hydrolysis and condensation of one or more of tetrachlorosilane, methyltrichlorosilane, dimethyldichlorosilane, trimethylchlorosilane, or by isolation of the desired fraction of an equilibrate mixture of hexamethyldisiloxane and octamethylcyclotetrasiloxane or the like and are commercially available.

Compounds suitable as the cyclic siloxane component of the present invention are those containing a polysiloxane ring structure that includes from 2 to 20 silicon atoms in the ring. Preferably, the linear, volatile siloxanes and cyclic siloxanes are relatively volatile materials, having, for example, a boiling point of below about 300°C at a pressure of 760 millimeters of mercury ("mm Hg").

In a preferred embodiment, the cyclic siloxane component comprises one or more compounds of the structural formula (II): 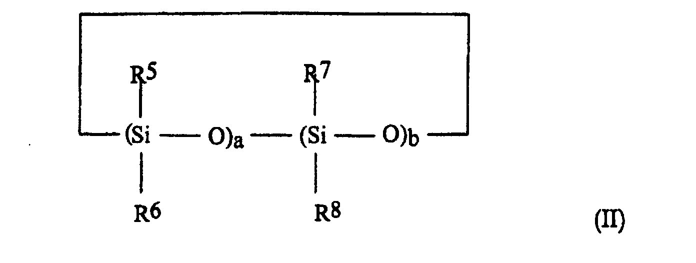 wherein:
R⁵, R⁶, R⁷ and R⁸ are each independently a monovalent hydrocarbon group; and
a and b are each integers wherein 0 ≤ a ≤ 10 and 0 ≤ b ≤ 10, provided that 3 ≤ (a + b) ≤ 10.

In a preferred embodiment, the cyclic siloxane comprises one or more of, octamethylcyclotetrasiloxane, decamethylcyclopentasiloxane, dodecamethylcyclohexasiloxane, tetradecamethylcycloheptasiloxane. In a more highly preferred embodiment, the cyclic siloxane of the present invention comprises octamethylcyclotetrasiloxane or decamethylcyclopentasiloxane. In a highly preferred embodiment, the cyclic siloxane component of the composition of the present invention consists essentially of decamethylcyclopentasiloxane.

Suitable cyclic siloxanes are made by known methods, such as, for example, hydrolysis and condensation of dimethyldichlorosilane and are commercially available.

It is believed that those dry cleaning solvents useful in the present invention that lack a cyclic siloxane component would be more stable than those which include a cyclic siloxane component, in that cyclic siloxanes are known to ring open and polymerize under acidic and basic conditions.

In a firat embodiment of the method of the present invention, approximately 100 parts by weight ("pbw") of siloxane solvent that mya can up to 0.1, preferably up to 0.01, even more preferably up to 0.001 pbw of an acidic impurity, contacts up to about 100, more preferably up to about 50, even more preferably up to about 10 pbw of adsorbent, neutralizing agent or a combination thereof, for about 0.0025 to about 6 hours, more preferably for about 0.01 to about 2 hours, even more preferably for about 0.1 to about 0.5 hours, at a temperature of from about 10 to about 80°C, more preferably from about 20 to about 60°C. After the siloxane solvent has contacted the adsorbent for the appropriate time and has been purified, the siloxane solvent can be recycled in the dry cleaning apparatus. The method of the present invention effectively reduces the level of impurities in the silicone solvent.

In a second embodiment of the method of the present invention, a dry cleaning fluid is treated by the method of the present invention.

The method of the present invention also comprises a dry cleaning process comprising the steps of: contacting an article with a silicone solvent, and removing the silicone solvent, then treating the silicone solvent that has been removed by contacting the silicone solvent with an adsorbent, neutralizing agent, or combination thereof, and separating the silicone solvent form the adsorbent, then reusing the treated silicone solvent in the dry cleaning process.

The following examples illustrate the process of the present invention. They are illustrative and the claims are not to be construed as limited to the examples.

### EXAMPLE 1

Decamethylcyclopentasiloxane (D₅) that was used as a dry cleaning solvent was mixed with an acid (LPNC) to make a stock solution containing 200 parts per million ("ppm") LPNC. Aliquots of the stock solution were heated to 100°C to determine if the mixture would undergo reequilibration and polymerization (increased D₄ and D₆ levels as well as increased viscosity). The results of the control experiments are shown in Table 1 below. Without any added acid, the D₅ was stable at 100°C for 24 hours. In the presence of 200 ppm LPNC, the viscosity rapidly increased over 7 hours and the composition was unable to be determined.

| Absorbents used in Examples | |
|---|---|
| **Adsorbent** | **Type of Adsorbent** |
| A | Diatomaceous earth (Celite® 545) |
| B | 4A molecular sieves |
| C | Powdered 13X molecular sieves |
| D | 13X molecular sieves |
| E | silica gel 60-200 mesh |
| F | acid clay (Filtrol® F-25) |
| G | fullers earth |
| H | Powdered decolorizing charcoal (Norit®) |
| T | DDBSA (dodecylbenzenesulfonic acid) |
| U | LPNC (linear phosphonitrilic chloride) |
| V | Hydrochloric acid |
| W | p-Toluenesulfonic acid |
| X | Acetic Acid |
| Y | Phosphoric acid |
| Z | Sulfuric acid |

**Table 1 -**

| Polymerization and Reequilibration of Ds with LPNC | | | | | | | | | | | |
|---|---|---|---|---|---|---|---|---|---|---|---|
| **Exp #** | **Temp (°C)** | **LPNC (ppm)** | **Rxn Time (h)** | **% D**_{**4**} | **% D**_{**5**} | **% D**_{**6**} | **Rxn Time (h)** | **% D**_{**4**} | **% D**_{**5**} | **% D**_{**6**} | **Visc. Increase** |
| Control | 100 | None | 0 | <0.2 | 99.46 | 0.47 | 24 | <0.2 | 99.46 | 0.47 | No |
| 1 | 100 | 200 | 7 | - | - | - | 24 | - | - | - | Gel* |

| | | | | | | | | | | | |
|---|---|---|---|---|---|---|---|---|---|---|---|
| *Viscosity was too high to measure. | | | | | | | | | | | |

### EXAMPLE 2

Stock solutions containing 200 ppm acid (LPNC) in Ds were prepared and then treated with a variety of adsorbents and neutralizing agents.
Approximately 0.1 gram of adsorbent was added to 10 grams of solution (1 % loading) and shaken for 1 minute, and then the adsorbent was removed. The solution was heated to 100°C for 4 hours and cyclic levels were measured. Heat was continued until 24 hours, and cyclic levels were again measured. Table 2 shows the results of cyclic formation.

**Table 2 -**

| 1% Adsorbent with 1 minute contact time. | | | | | | | | | |
|---|---|---|---|---|---|---|---|---|---|
| **Exp. #** | **Adsorb.** | **Rxn time (h)** | **% D**_{**4**} | **% D**_{**5**} | **% D**_{**6**} | **Rxn time (h)** | **% D**_{**4**} | **% D**_{**5**} | **% D**_{**6**} |
| 2 | H | 4 | <0.1 | 99.45 | 0.54 | 24 | <0.1 | 99.45 | 0.55 |
| 3 | E | 4 | <0.1 | 99.45 | 0.55 | 24 | <0.1 | 99.45 | 0.55 |
| 4 | C | 4 | <0.1 | 99.44 | 0.56 | 24 | <0.1 | 99.46 | 0.54 |
| 5 | I | 4 | <0.1 | 99.45 | 0.55 | 24 | <0.1 | 99.35 | 0.55 |
| 6 | F | 2 | <0.1 | 99.46 | 0.54 | 24 | <0.1 | 99.43 | 0.58 |

Table 2 indicates that using a low loading (1 %) and short contact time (1 minute), silica gel, carbon black, fullers earth, powdered 13X molecular sieves and acid clays all effectively prevented polymerization from occurring when compared to the control sample treated with the same level of acid.

### EXAMPLE 3

Tables 3 and 4 show the type of acid and the effect of acid level loading on the equilibration of D₅.

**Table 3 -**

| 1000 ppm acid in D₅ at 120 °C | | | | | | | | | |
|---|---|---|---|---|---|---|---|---|---|
| **Exp. #** | **Acid** | **Rxn time (h)** | **% D**_{**4**} | **% D**_{**5**} | **% D**_{**6**} | **Rxn time (h)** | **% D**_{**4**} | **% D**_{**5**} | **% D**_{**6**} |
| 7 | V | 4 | <0.1 | 99.52 | 0.48 | 24 | <0.1 | 99.39 | 0.61 |
| 8 | W | 4 | 0.56 | 99.84 | 0.59 | 24 | 1.93 | 97.2 | 1.05 |
| 9 | X | 4 | <0.1 | 99.51 | 0.49 | 24 | <0.1 | 99.52 | 0.48 |
| 10 | T | 4 | 10.89 | 80.53 | 6.27 | 24 | 15.12 | 74 | 7.67 |

**Table 4 -**

| 1000 ppm acid in D₅ (at 120 °C after treatment with 1% adsorbent for 1 minute) | | | | | | | | | | |
|---|---|---|---|---|---|---|---|---|---|---|
| **Exp. #** | **Adsorbent** | **Acid** | **Rxn time (h)** | **% D**_{**4**} | **% D**_{**5**} | **% D**_{**6**} | **Rxn time (h)** | **% D**_{**4**} | **% D**_{**5**} | **% D**_{**6**} |
| 11 | None | W | 4 | 0.70 | 98.31 | 0.96 | 24 | 1.25 | 98.37 | 1.14 |
| 12 | H | W | 4 | 0 | 99.26 | 0.74 | 24 | 0 | 99.32 | 0.68 |
| 13 | F | W | 4 | 0 | 99.33 | 0.67 | 24 | 0 | 99.05 | 0.95 |
| 14 | D | W | 4 | 0 | 99.25 | 0.75 | 24 | 0 | 99.55 | 0.45 |
| 15 | None | T | 4 | 1.08 | 90.89 | 3.28 | 24 | 2.96 | 93.05 | 2.05 |
| 16 | H | T | 4 | 0 | 99.26 | 0.74 | 24 | 0 | 99.30 | 0.70 |
| 17 | F | T | 4 | 0 | 99.23 | 0.76 | 24 | 0 | 99.26 | 0.74 |
| 18 | D | T | 4 | 0 | 100 | 0 | 24 | 0.04 | 98.52 | 1.47 |
| 19 | None | U | 4 | Gel | Gel | Gel | 24 | Gel | Gel | Gel |
| 20 | H | U | 4 | 0 | 99.33 | 0.66 | 24 | 0 | 99.22 | 0.78 |
| 21 | F | U | 4 | 0 | 99.32 | 0.68 | 24 | 0 | 99.24 | 0.76 |
| 22 | D | U | 4 | 0.73 | 97.03 | 0.92 | 24 | 0.67 | 97.92 | 0.92 |

For a number of the acids, a high loading was necessary to see reaction with D₅ at elevated temperatures. The same experiments and controls were run with a linear siloxane (MD₂M) containing acids. Results are shown in Tables 5 to 7.

**Table 5 -**

| 80 ppm acid in MD₂M at 100 °C. | | | | | | | | | | | |
|---|---|---|---|---|---|---|---|---|---|---|---|
| **Exp. #** | **Acid** | **Rxn time (h)** | **% MM** | **% MDM** | **% MD**_{**2**}**M** | **% MD**_{**3**}**M** | **Rxn time (h)** | **% MM** | **% MDM** | **% MD**_{**2**}**M** | **% MD**_{**3**}**M** |
| 23 | Control | 4 | 0 | 0 | 99.9 | 0 | 24 | 0 | 0 | 99.9 | 0 |
| 24 | U | 4 | 17.08 | 18.58 | 16.11 | 12.8 | 24 | 7.74 | 6.69 | 11.57 | 13.1 |
| 25 | V | 4 | 0 | 0 | 99.9 | 0 | 24 | 0 | 0 | 99.9 | 0 |
| 26 | W | 4 | 0 | 0 | 99.9 | 0 | 24 | 0 | 0 | 99.9 | 0 |
| 27 | X | 4 | 0 | 0 | 99.9 | 0 | 24 | 0 | 0 | 99.9 | 0 |
| 28 | Y | 4 | 0 | 0 | 99.9 | 0 | 24 | 0 | 0 | 99.9 | 0 |
| 29 | Z | 4 | 0 | 0 | 99.9 | 0 | 24 | 0 | 0 | 99.9 | 0 |

**Table 6 -**

| 1000 ppm acid in MD₂M at 120°C. | | | | | | | | | | | |
|---|---|---|---|---|---|---|---|---|---|---|---|
| **Exp. #** | **Acid** | **Rxn time (h)** | **% MM** | **% MDM** | **% MD**_{**2**}**M** | **% MD**_{**3**}**M** | **Rxn time (h)** | **% MM** | **% MDM** | **% MD**_{**2**}**M** | **% MD**_{**3**}**M** |
| 30 | T | 4 | 11.16 | 15.02 | 41.45 | 12.46 | 24 | 13.44 | 16.52 | 36.11 | 13.5 |
| 31 | W | 4 | 0 | 0 | 99.9 | 0 | 24 | 1.3 | .82 | 97.03 | .44 |

Again, high levels of acids were necessary to catalyze the redistribution of MD₂M.

The acid contaminants could be rendered inactive or less active by treatment with numerous agents as shown in Table 7.

**Table 7 -**

| 1 % Adsorbent with 1 min contact at 200 ppm LPNC in MD₂M at 100°C | | | | | | | | | | | |
|---|---|---|---|---|---|---|---|---|---|---|---|
| **Exp. #** | **Adsorbent** | **Rxn time (h)** | **% MM** | **% MDM** | **% MD**_{**2**}**M** | **% MD**_{**3**}**M** | **Rxn time (h)** | **% MM** | **% MDM** | **% MD**_{**2**}**M** | **% MD**_{**3**}**M** |
| 32 | H | 4 | <0.1 | 0 | 99.01 | .89 | 24 | 0 | 0 | 98.37 | 1.63 |
| 33 | E | 4 | <0.1 | 0 | 99.47 | .43 | 24 | 1.5 | .72 | 96.12 | .7 |
| 34 | C | 4 | <0.1 | 0 | 99.57 | .33 | 24 | 0 | 0 | 98.03 | .29 |
| 35 | D | 4 | 20.51 | 21.7 | 17.65 | 13.74 | 24 | 12.98 | 19.28 | 17.74 | 15.3 |
| 36 | B | 4 | 10.28 | 15.49 | 19.27 | 16.66 | 24 | 21.75 | 22 | 17.74 | 13.68 |
| 37 | G | 4 | <0.1 | 0 | 98.90 | 0 | 24 | 0 | 0 | 98.9 | 0 |
| 38 | F | 4 | <0.1 | 0 | 99.60 | .296 | 24 | 0 | 0 | 99.22 | 0 |
| 39 | A | 4 | 21.33 | 21.49 | 17.65 | 13.94 | 24 | 15.21 | 18.64 | 15.74 | 12.58 |

The process of the present invention is effective in reducing the level of acidic impurities in the silicone solvent.

## Claims

1. A method for stabilizing silicone dry cleaning solvents that contain an undesirable acidic impurity comprising, contacting the silicone dry cleaning solvent with an adsorbent, and separating the silicone solvent from the adsorbent.

2. The method of claim 1, wherein the amount of adsorbent, used is up to 100 parts by weight per 100 parts by weight of silicone solvent.

3. The method of claim 1, wherein the solvent contacts the adsorbent, for about 0.0025 to about 6 hours.

4. The method of claim 1, wherein the solvent contacts the adsorbent, at a temperature of from about 10 to about 80°C.

5. The method of claim 1, wherein the adsorbent used is selected from the group consisting of silica gel, diatomaceous earth, fullers earth, acid clay, 4A molecular sieves, 13X molecular sieves, and decolorizing charcoal.

6. The method of claim 1, wherein the solvent is a linear or branched siloxane comprising one or more compounds of the structural formula:
M_{2+y+2z}DₓT_{y}Q_{z}
wherein:
M is R¹₃SiO_{1/2};
D is R²₂SiO_{2/2};
T is R³SiO_{3/2};
and Q is SiO_{4/2}
R¹, R² and R³ are each independently a monovalent hydrocarbon radical; and
x and y are each integers, wherein 0 ≤ x ≤ 10 and 0 ≤ y ≤ 10 and 0 ≤ z ≤ 10.

7. The method of claim 6, wherein the linear or branched, volatile siloxane comprises octamethyltrisiloxane, decamethyltetrasiloxane, or dodecamethylpentasiloxane or methyltris(trimethylsiloxy)silane.

8. The method of claim 1, wherein the silicone is a cyclic siloxane comprising one or more compounds of the structural formula: 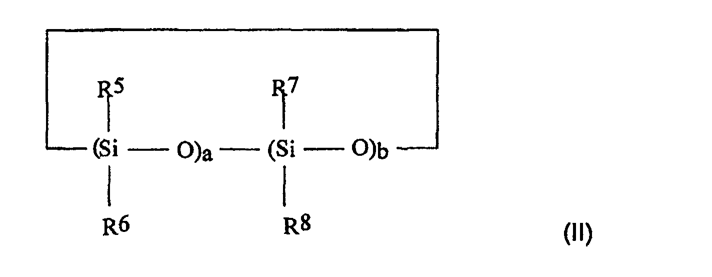 wherein:
R⁵, R⁶, R⁷ and R⁸ are each independently a monovalent hydrocarbon group; and
a and b are each integers wherein 0 ≤ a ≤ 10 and 0 ≤ b ≤ 10, provided that 3 ≤ (a + b) ≤ 10.

9. The method of claim 8, wherein the cyclic siloxane is octamethylcyclotetrasiloxane or decamethylcyclopentasiloxane.

10. The method of claim 1, wherein the acidic impurities removed from the solvent are linear phophonitrilic chloride, sulfuric acid, hydrochloric acid, methanesulfonic acid, dodecylbenzenesulfonic acid, p-toluenesulfonic acid, acetic acid, sulfuric acid or sulfuric acid or a combination thereof.

11. A dry cleaning process comprising:
(a) contacting the article with a silicone solvent; and
(b) removing the silicone solvent; and
(c) contacting the removed silicone solvent with an adsorbent selected from the group consisting of silica gel, diatomaceous earth, fullers earth, acid clay, 4A molecular sieves, 13X molecular sieves, and decolorizing charcoal; and
(d) separating the silicone solvent from the adsorbent.

12. The process of claim 11, further comprising reusing the treated silicone solvent of step (d).

13. The process of claim 11, wherein the dry cleaning process comprises a plurality of dry cleaning cycles comprising steps (a) and (b), and a plurality of stabilizing cycles comprising steps (c) and (d), wherein the dry cleaning cycle is repeated one or more times per each stabilizing cycle.

## Patentansprüche

1. Verfahren zur Stabilisierung von Silikonlösemitteln zur trockenen Reinigung, die eine unerwünschte säurehaltige Verunreinigung beinhalten, bei welchem Verfahren das Silikonlösemittel zur trockenen Reinigung mit einem Adsorbens in Kontakt gebracht wird und das Silikonlösemittel vom Adsorbens abgetrennt wird.

2. Verfahren gemäß Anspruch 1, wobei die Menge an eingesetztem Adsorbens bis zu 100 Gewichtsteilen pro 100 Gewichtsteilen des Silikonlösemittels ist.

3. Verfahren gemäß Anspruch 1, wobei das Lösemittel mit dem Adsorbens für etwa 0,0025 bis etwa 6 Stunden in Kontakt gebracht wird.

4. Verfahren gemäß Anspruch 1, wobei das Lösemittel mit dem Adsorbens bei einer Temperatur von etwa 10 bis etwa 80 °C in Kontakt gebracht wird.

5. Verfahren gemäß Anspruch 1, wobei das eingesetzte Adsorbens aus der Gruppe ausgewählt wird bestehend aus Kieselgel, Diatomeenerde, Bleicherde, saurem Ton, 4A Molekularsieben, 13X Molekularsieben und entfärbender Aktivkohle.

6. Verfahren gemäß Anspruch 1, wobei das Lösemittel ein lineares oder verzweigtes Siloxan ist, aufweisend eine oder mehrere Verbindungen der Strukturformel:
M_{2+y+2z}DₓT_{y}Q_{z}
worin:
M gleich R¹₃SiO_{1/2} ist;
D gleich R²₂SiO_{2/2} ist;
T gleich R³SiO_{3/2} ist;
und Q gleich SiO_{4/2} ist;
R¹, R² und R³ sind jeweils unabhängig voneinander ein monovalenter Kohlenwasserstoffrest; und x und y sind jeweils ganze Zahlen, wobei 0 ≤ x ≤ 10 und 0 ≤ y ≤ 10 und 0 ≤ z ≤ 10 ist.

7. Verfahren gemäß Anspruch 6, wobei das lineare oder verzweigte, leicht flüchtige Siloxan Octamethyltrisiloxan, Decamethyltetrasiloxan oder Dodecamethylpentasiloxan oder Methyltris(trimethylsiloxy)silan umfasst.

8. Verfahren gemäß Anspruch 1, wobei das Silikon ein zyklisches Siloxan ist, umfassend ein oder mehrere Verbindungen der Strukturformel: 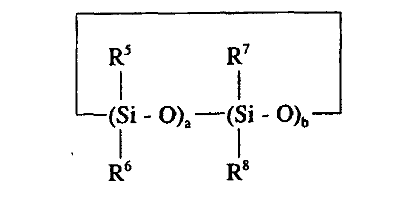 wobei:
R⁵, R⁶, R⁷ und R⁸ jeweils unabhängig voneinander eine monovalente Kohlenwasserstoffgruppe sind; und
a und b jeweils ganze Zahlen sind, worin 0 ≤ a ≤ 10 und 0 ≤ b ≤ 10 ist, sofern 3 ≤ (a + b) ≤ 10 ist.

9. Verfahren gemäß Anspruch 8, wobei das zyklische Siloxan Octamethylcyclotetrasiloxan oder Decamethylcyclopentasiloxan ist.

10. Verfahren gemäß Anspruch 1, bei welchem die säurehaltigen Verunreinigungen, die aus dem Lösemittel entfernt werden, lineares (phophonitrilic) Chlorid, Schwefelsäure, Salzsäure, Methansulfonsäure, Dodecylbenzolsulfonsäure, p-Toluolsulfonsäure, Essigsäure, Schwefelsäure oder Schwefelsäure oder eine Kombination davon sind.

11. Verfahren zur trockenen Reinigung aufweisend:
(a) das In Kontakt Bringen des Gegenstandes mit einem Silikonlösemittel; und
(b) das Entfernung des Silikonlösemittels; und
(c) das In Kontakt Bringen des entfernten Silikonlösemittels mit einem Adsorbens, das aus der Gruppe bestehend aus Kieselgel, Diatomeenerde, Bleicherde, saurem Ton, 4A Molekularsieben, 13X Molekularsieben und entfärbender Aktivkohle ausgewählt wird; und
(d) die Abtrennung des Silkonlösemittels vom Adsorbens.

12. Verfahren gemäß Anspruch 11, weiterhin aufweisend die Wiederverwendung des behandelten Silkonlösemittels aus Schritt (d).

13. Verfahren gemäß Anspruch 11, wobei das Verfahren zur trockenen Reinigung eine Vielzahl von Trockenreinigungszyklen, umfassend die Schritte (a) und (b), und eine Vielzahl von Stabilisierungszyklen, umfassend die Schritte (c) und (d), aufweist, wobei der Trockenreinigungszyklus ein- oder mehrmals pro jedem Stabilisierungszyklus wiederholt wird.

## Revendications

1. Procédé pour stabiliser des solvants de nettoyage à sec, du type silicone, contenant une impureté acide indésirable, qui comprend la mise en contact du solvant de nettoyage à sec, du type silicone, avec un adsorbant, et la séparation du solvant du type silicone de l'adsorbant.

2. Procédé selon la revendication 1, dans lequel la quantité d'adsorbant utilisée est au plus de 100 parties en poids pour 100 parties en poids de solvant du type silicone.

3. Procédé selon la revendication 1, dans lequel le solvant est mis en contact avec l'adsorbant pendant une durée d'environ 0,0025 heure à environ 6 heures.

4. Procédé selon la revendication 1, dans lequel le solvant est mis en contact avec l'adsorbant à une température d'environ 10 à environ 80 °C.

5. Procédé selon la revendication 1, dans lequel l'adsorbant utilisé est choisi parmi le gel de silice, la terre de diatomées, la terre à foulon, les argiles acides, les tamis moléculaires 4A, les tamis moléculaires 13X, et le charbon décolorant.

6. Procédé selon la revendication 1, dans lequel le solvant est un siloxane linéaire ou ramifié, comprenant un ou plusieurs composés de formule développée :
M_{2+y+2z}DₓT_{y}Q_{z}
dans laquelle
M représente R¹₃SiO_{1/2},
D représente R²₂SiO_{2/2},
T représente R³SiO_{3/2},
et Q représente SiO_{4/2},
R¹, R² et R³ représentent chacun indépendamment un radical hydrocarboné monovalent, x et y représentent des nombres entiers tels que 0 ≤ x ≤ 10 et 0 ≤ y ≤ 10, et z représente un nombre tel que 0 ≤ z ≤ 10.

7. Procédé selon la revendication 6, dans lequel le siloxane volatil, linéaire ou ramifié, comprend de l'octaméthyltrisiloxane, du décaméthyltétrasiloxane, du dodécaméthylpentasiloxane ou du méthyltris(triméthylsiloxy)silane.

8. Procédé selon la revendication 1, dans lequel la silicone est un siloxane cyclique comprenant un ou plusieurs composés de formule développée : 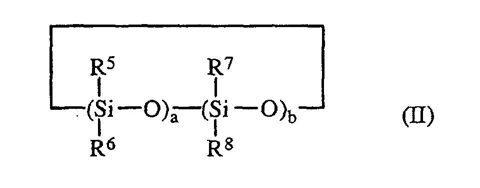 dans laquelle R⁵, R⁶, R⁷ et R⁸ représentent chacun indépendamment un groupe hydrocarboné monovalent, et a et b représentent des nombres entiers tels que 0 ≤ a ≤ 10 et 0 ≤ b ≤ 10, étant entendu que leur somme vérifie la relation 3 ≤ (a+b) ≤ 10.

9. Procédé selon la revendication 8, dans lequel le siloxane cyclique est l' octaméthylcyclotétrasiloxane ou le décaméthylcyclopentasiloxane.

10. Procédé selon la revendication 1, dans lequel les impuretés acides éliminées du solvant sont le chlorure phosphonitrilique linéaire, l'acide sulfurique, l'acide chlorhydrique, l'acide méthanesulfonique, l'acide dodécylbenzènesulfonique, l'acide p-toluènesulfonique, l'acide acétique, ou une combinaison de ces acides.

11. Procédé de nettoyage à sec, qui comprend :
(a) la mise en contact de l'article avec un solvant du type silicone,
(b) la séparation du solvant du type silicone,
(c) la mise en contact du solvant du type silicone séparé avec un adsorbant choisi parmi le gel de silice, la terre de diatomées, la terre à foulon, les argiles acides, les tamis moléculaires 4A, les tamis moléculaires 13X, et le charbon décolorant, et
(d) la séparation du solvant du type silicone de l'adsorbant.

12. Procédé selon la revendication 11, qui comprend en outre la réutilisation du solvant du type silicone traité, provenant de l'étape (d).

13. Procédé selon la revendication 11, qui comprend plusieurs cycles de nettoyage à sec, comprenant les étapes (a) et (b), et plusieurs cycles de stabilisation, comprenant les étapes (c) et (d), le cycle de nettoyage à sec étant répété une ou plusieurs fois pour chaque cycle de stabilisation.
